(19) **Europäisches Patentamt European Patent Office Office européen des brevets**

(11) **EP 4 060 777 B1**

(12) **EUROPEAN PATENT SPECIFICATION**

(45) Date of publication and mention of the grant of the patent:
**10.04.2024 Bulletin 2024/15**

(51) International Patent Classification (IPC):
*H01M 8/1053* (2016.01)   *H01M 8/1023* (2016.01)
*H01M 8/1039* (2016.01)   *H01M 8/1088* (2016.01)
*H01M 8/1086* (2016.01)   *H01M 8/10* (2016.01)

(21) Application number: **21217326.4**

(22) Date of filing: **23.12.2021**

(52) Cooperative Patent Classification (CPC):
**H01M 8/1053; H01M 8/1023; H01M 8/1039; H01M 8/1088; H01M 8/109;** H01M 2008/1095; H01M 2300/0094

(54) **POLYMER ELECTROLYTE MEMBRANE, METHOD FOR PREPARING THE MEMBRANE AND FUEL CELL COMPRISING THE MEMBRANE**

POLYMERELEKTROLYTMEMBRAN, VERFAHREN ZUR HERSTELLUNG DER MEMBRAN UND BRENNSTOFFZELLE MIT DIESER MEMBRAN

MEMBRANE ÉLECTROLYTE POLYMÈRE, PROCÉDÉ DE PRÉPARATION DE LA MEMBRANE ET PILE À COMBUSTIBLE COMPRENANT LA MEMBRANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2021 KR 20210034254**

(43) Date of publication of application:
**21.09.2022 Bulletin 2022/38**

(73) Proprietors:
• **Hyundai Mobis Co., Ltd.**
**Gangnam-gu**
**Seoul 06141 (KR)**
• **Dankook University Cheonan Campus Industry Academic Cooperation Foundation Chungcheongnam-do 31116 (KR)**

(72) Inventors:
• **HEO, Pil Won**
**18478 Hwaseong-si (KR)**
• **LEE, Sung Chul**
**17103 Yongin-si (KR)**

• **KANG, Eun Heui**
**16509 Suwon-si (KR)**
• **CHOI, Seung Kyu**
**16397 Suwon-si (KR)**
• **JEONG, Ki Young**
**16547 Suwon-si (KR)**
• **LEE, Chang Hyun**
**13589 Seongnam-si (KR)**
• **PARK, In Kee**
**31066 Cheonan-si (KR)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(56) References cited:
EP-A1- 3 613 800        WO-A1-98/50457
US-A1- 2004 018 411     US-A1- 2012 234 674

**Description**

CROSS-REFERENCE TO RELATED APPLICATION

This application claims the benefit of priority to Korean Patent Application No. 10-2021-0034254, filed in the Korean Intellectual Property Office on March 16, 2021

BACKGROUND

**1. Field**

The following description relates to a polymer electrolyte membrane, and more particularly, to a polymer electrolyte membrane for a fuel cell with excellent reaction gas barrier ability, a method for preparing the same, a membrane-electrode assembly including the same, and a fuel cell including the same.

**2. Discussion of Related Art**

A fuel cell electrochemically oxidizes fuels such as hydrogen and methanol in the cell to convert chemical energy of the fuels into electrical energy. In particular, a polymer electrolyte membrane fuel cell (PEFC) uses a solid polymer electrolyte membrane with ion conductive properties, and thus operates at a low-temperature, compared to a high-temperature operating fuel cell such as a solid oxide fuel cell (SOFC), and achieves a simple system, and thus is used as a power source for vehicles and buildings.

Main characteristics required for a solid polymer electrolyte membrane of the polymer electrolyte membrane fuel cell include mechanical properties for physical durability, high hydrogen ion conductivity for realization of performance, and reaction gas barrier ability to improve fuel cell efficiency and chemical durability.

In this connection, when there is a defect in the solid polymer electrolyte membrane or when micropores exist therein, there may be a trace amount of reaction gas permeation. Thus, the permeation of gas such as hydrogen and air produce chemical radicals (e.g., hydroxyl radicals) to promote structural decomposition of the solid polymer electrolyte by the radicals. This may result in thinning of the solid polymer electrolyte membrane during operation of the fuel cell. Thus, a pinhole may occur and spread, which is a direct cause of shortening a lifespan of a membrane-electrode assembly of the fuel cell.

EP 3 613 800 A1 discloses a method of preparing an ion-exchange membrane, which is characterized by modifying sulfonic acid groups of a perfluorinated sulfonic acid electrolyte membrane with carboxyl groups and includes chlorinating sulfonic acid groups of a perfluorinated sulfonic acid electrolyte membrane; nitrilating the chlorinated electrolyte membrane; and hydrolyzing the nitrilated electrolyte membrane.

WO 98/50457 A1 A discloses a composite membrane including an ion exchange polymer and a support of expanded polytetrafluoroethylene polymer having a porous microstructure of polymeric fibrils, said expanded polytetrafluoroethylene polymer being at least about 85 % crystalline.

US 2004/018411 A1 teaches the increase of the conductivity of carboxylic acid membranes for use in fuel cells when the membrane comprises a Lewis base, which has, in its protonated form, a pKa greater than the pKa of the carboxylic acid groups of the membrane.

US 2012234675 A1 discloses an electrolytic cell comprising: a containment vessel; a first electrode; a second electrode; a source of electrical current in electrical communication with the first electrode and the second electrode; an electrolyte in fluid communication with the first electrode and the second electrode; a gas, wherein the gas is formed during electrolysis at or near the first electrode; and a separator; wherein the first electrode is configured to control the location of nucleation of the gas by substantially separating the location of electron transfer and nucleation.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The present invention provides a polymer electrolyte membrane including: a first ion conductive polymer layer; and a second ion conductive polymer layer disposed on at least one surface of the first ion conductive polymer layer, wherein the first ion conductive polymer layer includes a first ion conductive polymer including a sulfonic acid group, wherein the second ion conductive polymer layer includes a second ion conductive polymer comprising a carboxylic acid group, and wherein a thickness of the second ion conductive polymer layer is in a range of 1% to 80% of a thickness of the polymer electrolyte membrane.

The second ion conductive polymer layer includes: a third ion conductive polymer layer disposed on at least one surface of the first ion conductive polymer layer; and a fourth ion conductive polymer layer disposed on one surface of the third ion conductive polymer layer, wherein the third ion conductive polymer layer includes a third ion conductive polymer including the carboxylic acid group and the sulfonic acid group, and wherein the fourth ion conductive polymer layer includes a fourth ion conductive polymer including the carboxylic acid group.

A thickness of the third ion conductive polymer layer may be in a range of 1 to 40% of the thickness of the polymer electrolyte membrane, and wherein a thickness of the fourth ion conductive polymer layer may be in a range of 1 to 40% of the thickness of the polymer electrolyte membrane.

The third ion conductive polymer layer has a first concentration gradient of the carboxylic acid group and a second concentration gradient of the sulfonic acid group.

The first concentration gradient of the carboxylic acid group may increase in a thickness direction from the first ion conductive polymer layer to the fourth ion conductive polymer layer, and the second concentration gradient of the sulfonic acid group may decrease in the thickness direction from the first ion conductive polymer layer to the fourth ion conductive polymer layer.

The polymer electrolyte membrane may include: the first ion conductive polymer layer; and the second ion conductive polymer layer disposed one surface of the first ion conductive polymer layer, wherein the thickness of the second ion conductive polymer layer may be a range of 1 to 40% of the thickness of the polymer electrolyte membrane.

The polymer electrolyte membrane may include: the first ion conductive polymer layer; and a plurality of the second ion conductive polymer layers respectively disposed on both opposing surfaces of the first ion conductive polymer layer, wherein a thickness of each of the plurality of the second ion conductive polymer layers may be in a range of 1 to 40% of the thickness of the polymer electrolyte membrane.

The thickness of the polymer electrolyte membrane may be in a range of $10\mu$m to $100\mu$m.

The first ion conductive polymer may include a sulfonated product of at least one polymer selected from the group consisting of a fluoropolymer, a hydrocarbon-based polymer, and a partially fluorinated polymer.

The first ion conductive polymer layer may include a porous substrate.

The polymer electrolyte membrane may have a hydrogen permeability of $61.975\times10^{-16}$mol·m/m$^2$·s·Pa (18.5 Barrer) or less at 70°C as measured using a time-lag method.

The polymer electrolyte membrane may have an oxygen permeability of less than $13.4\times10^{-16}$mol·m/m$^2$·s·Pa (4.0 Barrer) at 70°C as measured using a time-lag method.

The present invention further provides a method for preparing a polymer electrolyte membrane including: preparing a first ion conductive polymer membrane including a first ion conductive polymer layer including a sulfonic acid group; performing a chlorination reaction on at least one surface of the first ion conductive polymer membrane for 5 to 30 minutes such that a second ion conductive polymer membrane including a chlorinated ion conductive polymer layer is formed on at least one surface of the first ion conductive polymer layer, wherein the chlorinated ion conductive polymer layer is formed by partially chlorinating the sulfonic acid group; performing a nitrilation reaction on the second ion conductive polymer membrane such that a third ion conductive polymer membrane including a nitrilated ion conductive polymer layer is formed on at least one surface of the first ion conductive polymer layer, wherein the nitrilated ion conductive polymer layer is formed by replacing a chlorine in the chlorinated ion conductive polymer layer with a nitrile group; performing a hydrolysis reaction on the third ion conductive polymer membrane such that a fourth ion conductive polymer membrane including a second ion conductive polymer layer is formed on at least one surface of the first ion conductive polymer layer, wherein the second ion conductive polymer layer is formed by replacing the nitrile group of the nitrilated ion conductive polymer layer with a carboxylic acid group; and performing heat treatment on the fourth ion conductive polymer membrane at $\pm10$°C around a glass transition temperature of an ion conductive polymer including a carboxylic acid group, thereby preparing the polymer electrolyte membrane, wherein a thickness of the second ion conductive polymer layer is in a range of 1 to 80% of a thickness of the polymer electrolyte membrane.

The performing the chlorination reaction may include immersing the first ion conductive polymer membrane in a chlorination reaction solution including a hydrochloric acid and an ammonium chloride.

The present invention also provides a membrane-electrode assembly including a negative-electrode; a positive-electrode; and a polymer electrolyte membrane including the polymer electrolyte membrane, interposed between the negative-electrode and the positive-electrode.

The present invention further provides a fuel cell including the membrane-electrode assembly.

Other features and aspects will be apparent from the following detailed description, the drawings, and the claims.

BRIEF DESCRIPTION OF THE DRAWINGS

FIG. 1 is a graph showing results of dynamic mechanical analysis based on a type of an ion conductive group (sulfonic acid group and carboxylic acid group) contained in an ion conductive polymer of a polymer electrolyte membrane used in example of the present disclosure.

FIG. 2 shows a photograph taken and analyzed via a line scan method using SEM-EDX (Scanning Electron Microscope-Energy Dispersive X-ray Spectrometer), about a cross section of a polymer electrolyte membrane after hydrogen ions of a polymer electrolyte membrane prepared in Example 2 of the present disclosure are replaced with sodium ions.

FIG. 3 is a graph showing hydrogen permeability based on a temperature as measured using a time-lag method, about a polymer electrolyte membrane prepared in each of Examples 1 and 2 and Comparative Examples 1 and 2 of the present disclosure.

FIG. 4 is a graph showing oxygen permeability based on a temperature as measured using a time-lag method, about a polymer electrolyte membrane prepared in each of Examples 1 and 2 and Comparative Examples 1 and 2 of the present disclosure.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for the purpose of describing particular examples only and is not to be limiting of the examples. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The terms or words used in the present specification and claims should not be construed as being limited to conventional or dictionary meanings. Rather, based on a principle that the inventor may adequately define concepts of the terms to describe his/her invention in the best way, the terms should be interpreted as a meaning and concept consistent with the technical idea of the present disclosure.

In the present disclosure, a term 'polymer' is meant to include both a homopolymer in which one type of monomer is polymerized and a copolymer in which two or more types of comonomers are copolymerized.

In the present disclosure, a term 'ion conductive polymer' is meant to include both a polymer containing an ion conductive group on a main chain of the polymer, as well as an intermediate of a reaction for imparting the ion conductive group to the main chain of the polymer. Therefore, when each of a chlorinated ion conductive polymer of a chlorinated ion conductive polymer layer, and a nitrilated ion conductive polymer of a nitrilated ion conductive polymer layer as described in a preparation method of the polymer electrolyte membrane described in the present disclosure is free of the ion conductive group, each of the chlorinated ion conductive polymer and the nitrilated ion conductive polymer acts as an intermediate of the reaction to prepare the ion conductive polymer and thus belongs to the ion conductive polymer.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

The present disclosure provides a polymer electrolyte membrane. The polymer electrolyte membrane may be a polymer electrolyte membrane for a fuel cell. In a specific example, the polymer electrolyte membrane for a polymer electrolyte membrane fuel cell (PEFC).

According to the present invention, the polymer electrolyte membrane includes a first ion conductive polymer layer; and a second ion conductive polymer layer formed in at least one surface of the first ion conductive polymer layer, wherein the first ion conductive polymer layer includes an ion conductive polymer containing a sulfonic acid group, wherein the second ion conductive polymer layer includes an ion conductive polymer containing a carboxylic acid group, wherein a thickness of the second ion conductive polymer layer is in a range of 1 % to 80% of a thickness of the polymer electrolyte membrane.

The polymer electrolyte membrane includes the second ion conductive polymer layer. Thus, a sp2 hybrid structure from the carboxylic acid group and a dimer due to a hydrogen bond may be achieved, thereby achieving a cross-linked structure. In addition, when the polymer electrolyte membrane is applied on an ionomer electrode and is used as a membrane surface layer of a membrane-electrode assembly, the polymer electrolyte membrane may exhibit high mechanical properties in humid and low humidity conditions. In addition, chemical stability may be ensured, and thus, reaction gas barrier ability of the polymer electrolyte membrane may be improved. However, the carboxylic acid group has lower ionic conductivity than that of the sulfonic acid group. Thus, when all sulfonic acid groups of the polymer electrolyte membrane are substituted or modified into the carboxylic acid groups, the polymer electrolyte membrane itself may lose a hydrogen ion conduction function, apart from the improvement of the mechanical properties and chemical stability as described above. Therefore, it is very important to control the thickness of the second ion conductive polymer layer in order to that the polymer electrolyte membrane according to the present disclosure simultaneously secures the mechanical properties and chemical stability while basically maintaining the ion conductivity of the polymer electrolyte membrane. In this regard, the thickness of the second ion conductive polymer layer is 1% or more, and may be 5% or more, 10% or more, 15% or more, or 20% or more of the thickness of the polymer electrolyte membrane, and is 80% or less, and may be 60% or less, 50% or less, 45% or less, or 40% or less of the thickness of the polymer electrolyte membrane.

According to one embodiment of the present disclosure, the polymer electrolyte membrane may be prepared by a preparation method of the polymer electrolyte membrane to be described below. In a specific example, the second ion conductive polymer layer may be formed by modifying at least one surface of the first ion conductive polymer layer. Accordingly, the second ion conductive polymer layer includes a third ion conductive polymer layer including an ion conductive polymer in which some of the sulfonic acid groups in at least one surface of the first ion conductive polymer layer are modified into carboxylic acid groups; and a fourth ion conductive polymer layer including an ion conductive polymer in which all of the sulfonic acid groups in at least one surface of the first ion conductive polymer layer are modified into carboxylic acid groups.

The second ion conductive polymer layer includes : the third ion conductive polymer layer formed in at least one surface of the first ion conductive polymer layer; and the fourth ion conductive polymer layer formed in one surface of the third ion conductive polymer layer, wherein the third ion conductive polymer layer includes an ion conductive polymer containing a carboxylic acid group and a sulfonic acid group, wherein the fourth ion conductive polymer layer includes an ion conductive polymer containing a carboxylic acid group.

That is, the polymer electrolyte membrane according to the present invention includes the first ion conductive polymer layer; the third ion conductive polymer layer formed in at least one surface of the first ion conductive polymer layer; and the fourth ion conductive polymer layer formed in one surface of the third ion conductive polymer layer.

According to one embodiment of the present disclosure, for the same reason for which the thickness of the second ion conductive polymer layer is adjusted as described above, a thickness of the third ion conductive polymer layer may be in a range of 1% to 40% of the thickness of the polymer electrolyte membrane. When this defined range is met, the mechanical properties and chemical stability may be secured at the same time while basically maintaining the ion conductivity of the polymer electrolyte membrane, and the reaction gas barrier ability of the polymer electrolyte membrane may be particularly excellent. In a specific example, the thickness of the third ion conductive polymer layer may be 1% or more, 2.5% or more, 5% or more, 7.5% or more, or 10% or more of the thickness of the polymer electrolyte membrane, and may be 40% or less, 30% or less, 25% or less, or 20% or less of the thickness of the polymer electrolyte membrane.

According to one embodiment of the present disclosure, for the same reason for which the thickness of the second ion conductive polymer layer is adjusted as described above, the thickness of the fourth ion conductive polymer layer may be in a range of 1 % to 40% of the thickness of the polymer electrolyte membrane. When this defined range is met, the mechanical properties and chemical stability may be secured at the same time while basically maintaining the ion conductivity of the polymer electrolyte membrane, and the reaction gas barrier ability of the polymer electrolyte membrane may be particularly excellent. In a specific example, the thickness of the fourth ion conductive polymer layer may be 1% or more, 2.5% or more, 5% or more, 7.5% or more, or 10% or more of the thickness of the polymer electrolyte membrane, and may be 40% or less, 30% or less, 25% or less, or 20% or less of the thickness of the polymer electrolyte membrane.

According to the present invention, the third ion conductive polymer layer has a concentration gradient of each of the carboxylic acid group and the sulfonic acid group of the ion conductive polymer containing a carboxylic acid group and a sulfonic acid group. In this connection, the concentration gradient is not limited to a case in which the concentration itself has a gradient according to the dictionary definition, but means that a molar ratio or a weight ratio of the carboxylic acid group and the sulfonic acid group has a gradient.

The third ion conductive polymer layer includes the ion conductive polymer containing both of the carboxylic acid group and the sulfonic acid group. In this connection, each of the carboxylic acid group and the sulfonic acid group is not distributed at a constant or uniform concentration across the ion conductive polymer included in the third ion conductive polymer layer, but is distributed so as to have a concentration gradient across the ion conductive polymer. This may be achieved by preparing the polymer electrolyte membrane according to the present disclosure using the preparation method of the polymer electrolyte membrane as described subsequently. When, as in the claimed invention, the polymer electrolyte membrane includes the third ion conductive polymer layer including the ion conductive polymer in which each of the carboxylic acid group and the sulfonic acid group of the ion conductive polymer has the concentration gradient, the reaction gas barrier ability may be further improved while preventing the deterioration of the ion conductivity of the electrolyte membrane, compared to a case where the first ion conductive polymer layer including the ion conductive polymer containing the sulfonic acid group and the fourth ion conductive polymer layer including the ion conductive polymer containing the carboxylic acid group are in direct contact with each other.

According to one embodiment of the present disclosure, the third ion conductive polymer layer may be composed such that the carboxylic acid group of the ion conductive polymer containing both of the carboxylic acid group and the sulfonic acid group has a gradient in which a concentration of the carboxylic acid group increases in a thickness direction from the first ion conductive polymer layer to the fourth ion conductive polymer layer, and the sulfonic acid group of the ion conductive polymer containing both of the carboxylic acid group and the sulfonic acid group has a concentration gradient in which a concentration of the sulfonic acid group decreases in the thickness direction from the first ion conductive polymer layer to the fourth ion conductive polymer layer.

According to one embodiment of the present disclosure, the polymer electrolyte membrane may include a first ion conductive polymer layer; and a second ion conductive polymer layer formed in one surface of the first ion conductive polymer layer, wherein a thickness of the second ion conductive polymer layer may be in a range of 1% to 40% of a thickness of the polymer electrolyte membrane. That is, the polymer electrolyte membrane may include a stack structure including 'the first ion conductive polymer layer/the second ion conductive polymer layer'.

According to one embodiment of the present disclosure, when the polymer electrolyte membrane includes the second ion conductive polymer layer formed in one surface of the first ion conductive polymer layer, the thickness of the second ion conductive polymer layer may be 1% or more, 2.5% or more, 5% or more, 7.5% or more, or 10% or more of the thickness of the polymer electrolyte membrane, and may be 40% or less, 30% or less, 25% or less, or 20% or less of the thickness of the polymer electrolyte membrane. When this defined range is met, the mechanical properties and chemical stability may be secured at the same time while basically maintaining the ion conductivity of the polymer electrolyte membrane, and the reaction gas barrier ability of the polymer electrolyte membrane may be particularly excellent.

According to one embodiment of the present disclosure, the polymer electrolyte membrane may include a first ion conductive polymer layer; a third ion conductive polymer layer formed in one surface of the first ion conductive polymer layer; and a fourth ion conductive polymer layer formed in one surface of the third ion conductive polymer layer. That is, the polymer electrolyte membrane may include a stack structure including 'the first ion conductive polymer layer/the third ion conductive polymer layer/the fourth ion conductive polymer layer'. In this connection, a thickness of the third ion conductive polymer layer may be in a range of 0.5% to 20% of the thickness of the polymer electrolyte membrane, and a thickness of the fourth ion conductive polymer layer may be in a range of 0.5% to 20% of the thickness of the polymer electrolyte membrane. When this defined range is met, the mechanical properties and chemical stability may be secured at the same time while basically maintaining the ion conductivity of the polymer electrolyte membrane, and the reaction gas barrier ability of the polymer electrolyte membrane may be particularly excellent. In this connection, in a specific example, each of the thickness of the third ion conductive polymer layer and the thickness of the fourth ion conductive polymer layer may be 0.5% or more, 1.25% or more, 2.5% or more, 3.75% or more, or 5% or more of the thickness of the polymer electrolyte membrane, and may be 20% or less, 15% or less, 12.5% or less, or 10% or less of the thickness of the polymer electrolyte membrane.

According to one embodiment of the present disclosure, the polymer electrolyte membrane may include a first ion conductive polymer layer; and a plurality of second ion conductive polymer layers respectively formed in both opposing surfaces of the first ion conductive polymer layer, wherein a thickness of each of the plurality of second ion conductive polymer layers may be in a range of 1% to 40% of the thickness of the polymer electrolyte membrane. That is, the polymer electrolyte membrane may include a stack structure including 'the second ion conductive polymer layer/the first ion conductive polymer layer/the second ion conductive polymer layer'.

According to one embodiment of the present disclosure, when the polymer electrolyte membrane includes the plurality of second ion conductive polymer layers respectively formed in both opposing surfaces of the first ion conductive polymer layer, the thickness of each of the plurality of second ion conductive polymer layers may be in a range of 1% to 40% of the thickness of the polymer electrolyte membrane. When this defined range is met, the mechanical properties and chemical stability may be secured at the same time while basically maintaining the ion conductivity of the polymer electrolyte membrane, and the reaction gas barrier ability of the polymer electrolyte membrane may be particularly excellent. In this connection, in a specific example, the thickness of each of the plurality of second ion conductive polymer layers may be 1% or more, 2.5% or more, 5% or more, 7.5% or more, or 10% or more of the thickness of the polymer electrolyte membrane, and may be 40% or less, 30% or less, 25% or less, or 20% or less of the thickness of the polymer electrolyte membrane.

According to one embodiment of the present disclosure, the polymer electrolyte membrane may include a first ion conductive polymer layer; a plurality of third ion conductive polymer layers respectively formed in both opposing surfaces of the first ion conductive polymer layer; and a fourth ion conductive polymer layer formed in one surface of each of the plurality of third ion conductive polymer layers. That is, the polymer electrolyte membrane includes a stack structure including 'the fourth ion conductive polymer layer/the third ion conductive polymer layer/the first ion conductive polymer layer/the third ion conductive polymer layer/the fourth ion conductive polymer layer'. In this connection, a thickness of each of the third ion conductive polymer layer may be in a range of 0.5% to 20% of the thickness of the polymer electrolyte membrane, and a thickness of each of the fourth ion conductive polymer layers may be in a range of 0.5% to 20% of the thickness of the polymer electrolyte membrane. When this defined range is met, the mechanical properties and chemical stability may be secured at the same time while basically maintaining the ion conductivity of the polymer electrolyte membrane, and the reaction gas barrier ability of the polymer electrolyte membrane may be particularly excellent. In this connection, in a specific example, each of the thickness of each of the third ion conductive polymer layer and the thickness of each of the fourth ion conductive polymer layers may independently be 0.5% or more, 1.25% or more, 2.5% of or more, 3.75% or more, or 5% or more of the thickness of the polymer electrolyte membrane and may independently be 20% or less, 15% or less, 12.5% or less, or 10% or less of the thickness of the polymer electrolyte membrane.

According to one embodiment of the present disclosure, the thickness of the polymer electrolyte membrane may be in a range of $10\mu m$ to $100\mu m$, $20\mu m$ to $80\mu m$, or $40\mu m$ to $60\mu m$. When this defined range is met, the polymer electrolyte membrane may be suitable for use in the fuel cell, and the ion conductivity, mechanical properties, and chemical stability thereof may be secured. % as described above may be a percentage based on a total thickness of the polymer electrolyte membrane.

According to one embodiment of the present disclosure, the ion conductive polymer containing the sulfonic acid group may be a sulfonated product of one or more polymers selected from a group consisting of a fluoropolymer, a hydrocarbon-based polymer, and a partially fluorinated polymer. In this case, the hydrogen ion conduction ability and the reaction gas barrier ability may be excellent.

According to one embodiment of the present disclosure, the sulfonated fluoropolymer may be at least one selected from a group consisting of a poly(perfluorosulfonic acid), poly(perfluorocarboxylic acid) and a copolymer of fluorovinyl ether and tetrafluoroethylene containing a sulfonic acid group.

According to one embodiment of the present disclosure, the sulfonated hydrocarbon-based polymer may be at least one selected from a group consisting of sulfonated polyimide, sulfonated polyaryl ether sulfone, sulfonated polyetheretherketone, sulfonated polybenzimidazole, sulfonated polysulfone, sulfonated polystyrene, sulfonated polyphosphazenes, sulfonated polyetherethersulfones, sulfonated polyethersulfones, sulfonated polyetherbenzimidazoles, sulfonated polyarylene ether ketone, sulfonated polyether ketone, sulfonated polystyrene, sulfonated polyimidazole, sulfonated polyether ketone, and sulfonated polyaryl ether benzimidazole.

According to one embodiment of the present disclosure, the sulfonated partially fluorinated polymer may be at least one selected from a group consisting of sulfonated poly(arylene ether sulfone-co-vinylidene fluoride), sulfonated trifluorostyrene-grafted-poly(tetrafluoroethylene) and styrene-grafted sulfonated polyvinylidene fluoride.

According to one embodiment of the present disclosure, the first ion conductive polymer layer may include a porous substrate. In a specific example, when the first ion conductive polymer layer includes the porous substrate, the first ion conductive polymer layer may be prepared from a first ion conductive polymer membrane prepared by impregnating a porous reinforcing membrane with a coated layer formation solution containing an ion conductive polymer containing a sulfonic acid group, and drying and heating the membrane. Thus, when the first ion conductive polymer layer includes the porous substrate prepared from the porous reinforcing membrane, this has an effect of further improving the mechanical properties of the polymer electrolyte membrane.

According to one embodiment of the present disclosure, when the first ion conductive polymer layer includes the porous substrate, the first ion conductive polymer layer may include the porous substrate; and a coated layer formed in each of both opposing surfaces of the porous substrate, wherein the porous substrate may have pores filled with the ion conductive polymer containing a sulfonic acid group, wherein the coated layer may include the ion conductive polymer containing a sulfonic acid group. In a specific example, when the first ion conductive polymer layer includes the porous substrate, the first ion conductive polymer layer may include a stack structure of 'the ion conductive polymer layer including the sulfonic acid group/the porous substrate having pores filled with the ion conductive polymer containing the sulfonic acid group/the ion conductive polymer containing the sulfonic acid group'.

According to one embodiment of the present disclosure, the porous substrate may be prepared from the porous reinforcing membrane, wherein the porous reinforcing membrane may be made of at least one selected from a group consisting of polytetrafluoroethylene, polyvinyldifluoroethylene, polyethylene, and polypropylene. In another example, the porous reinforcing membrane may be a stretched porous reinforcing membrane, wherein the stretched porous reinforcing membrane may be made of at least one selected from a group consisting of stretched polytetrafluoroethylene, stretched polyvinyldifluoroethylene, stretched polyethylene, and stretched polypropylene.

According to one embodiment of the present disclosure, the polymer electrolyte membrane may have a hydrogen permeability measured using a time-lag method which may be in a range of 18.5 Barrer or less, 1 Barrer to 18.5 Barrer, 10 Barrer to 18.5 Barrer, 14 Barrer to 18.5 Barrer, or 14.5 Barrer to 18.5 Barrer at 70°C (1 Barrer = $3.348 \times 10^{-16}$ mol·m/m$^2$·s·Pa). When this defined range is met, the hydrogen gas barrier ability may be excellent.

According to one embodiment of the present disclosure, the polymer electrolyte membrane may have an oxygen permeability measured using a time-lag method which may be in a range of less than 4.0 Barrer, 1 Barrer to 3.9 Barrer, 2 Barrer to 3.8 Barrer, or 3 Barrer to 3.8 Barrer at 70°C (1 Barrer = $3.348 \times 10^{-16}$ mol·m/m$^2$·s·Pa). When this defined range is met, the oxygen gas barrier ability may be excellent.

Further, the present invention provides a polymer electrolyte membrane preparation method for preparing the polymer electrolyte membrane. The polymer electrolyte membrane preparation method includes preparing a first ion conductive polymer membrane including an ion conductive polymer containing a sulfonic acid group (S10); performing a chlorination reaction in at least one surface of the first ion conductive polymer membrane for 5 to 30 minutes such that a second ion conductive polymer membrane including a chlorinated ion conductive polymer layer is formed in at least one surface of a first ion conductive polymer layer, wherein the chlorinated ion conductive polymer layer is formed by partially chlorinating the sulfonic acid group (S20); performing a nitrilation reaction in the second ion conductive polymer membrane such that a third ion conductive polymer membrane including a nitrilated ion conductive polymer layer is formed in at least one surface of the first ion conductive polymer layer, wherein the nitrilated ion conductive polymer layer is formed by replacing chlorine in the chlorinated ion conductive polymer layer with a nitrile group (S30); performing a hydrolysis reaction in the third ion conductive polymer membrane such that a fourth ion conductive polymer membrane including a second ion conductive polymer layer is formed in at least one surface of the first ion conductive polymer layer, wherein the second ion conductive polymer layer is formed by replacing the nitrile group of the nitrilated ion conductive polymer layer with a carboxylic acid group (S40); and performing heat treatment of the fourth ion conductive polymer membrane at ±10°C around a glass transition temperature of an ion conductive polymer containing a carboxylic acid group, thereby preparing the polymer electrolyte membrane (S50), wherein a thickness of the second ion conductive polymer layer is in a range of 1 to 80% of a thickness of the polymer electrolyte membrane.

According to one embodiment of the present disclosure, the configurations of the polymer electrolyte membrane as described above are equally applied to the polymer electrolyte membrane preparation method unless otherwise specified.

According to one embodiment of the present disclosure, the step (S10) includes preparing the first ion conductive polymer membrane, wherein in preparing the polymer electrolyte membrane, the first ion conductive polymer membrane may act as a base membrane for forming the first ion conductive polymer layer prior to forming the second ion conductive polymer layer in at least one surface of the first ion conductive polymer layer, and for forming the second ion conductive polymer layer in a subsequent step.

According to one embodiment of the present disclosure, the first ion conductive polymer membrane may be an ion conductive polymer membrane itself including a sulfonic acid group. In another example, the first ion conductive polymer membrane may include the porous substrate prepared by providing the porous reinforcing membrane (S11); impregnating the porous reinforcing membrane with the coated layer formation solution including an ion conductive polymer (S12); and drying and/or heat-treating the porous reinforcing membrane impregnated with the coated layer formation solution (S13).

According to one embodiment of the present disclosure, the step (S20) may include forming the second ion conductive polymer membrane including the chlorinated ion conductive polymer layer formed via partial chlorination of the sulfonic acid group in at least one surface of the first ion conductive polymer layer, wherein the step (S20) may be carried out via the chlorination reaction for 5 to 30 minutes in at least one surface of the first ion conductive polymer membrane.

According to one embodiment of the present disclosure, the polymer electrolyte membrane prepared by the polymer electrolyte membrane preparation method should have the mechanical properties and chemical stability at the same time while maintaining the ionic conductivity. Accordingly, the method for manufacturing the polymer electrolyte membrane according to the present disclosure essentially includes the heat treatment step (S50).

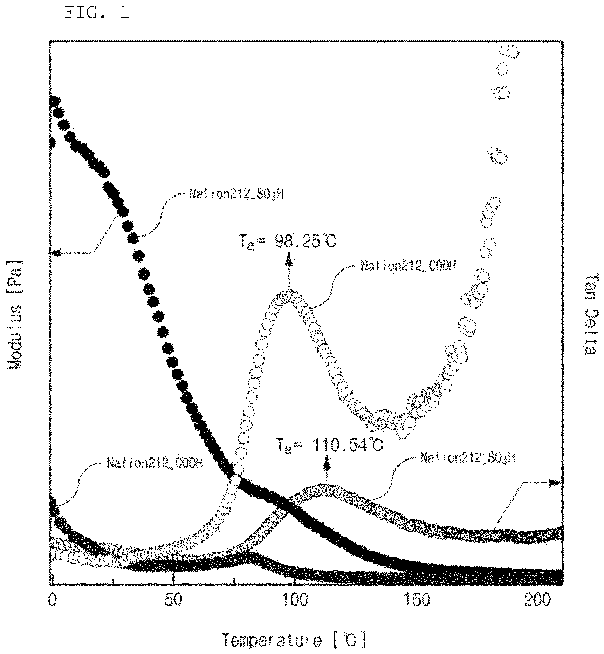

In this regard, as shown graphically in FIG. 1, it may be identified from a dynamic mechanical analysis result based on the type of the ion conductive group (sulfonic acid group and carboxylic acid group) contained in the ion conductive polymer of the polymer electrolyte membrane used in an embodiment of the present disclosure, that the ion conductive polymer containing a sulfonic acid group corresponding to the first ion conductive polymer layer has a glass transition temperature (Ta) of 110.54 °C, while the ion conductive polymer containing a carboxylic acid group corresponding to the second ion conductive polymer layer has the glass transition temperature (Ta) of 98.25 °C.

That is, the first ion conductive polymer layer including the ion conductive polymer containing a sulfonic acid group, and the second ion conductive polymer layer including the ion conductive polymer containing a carboxylic acid group as prepared according to the polymer electrolyte membrane preparation method of the present disclosure have different glass transition temperatures as described above. Accordingly, when performing the heat treatment step(S50) in preparing the polymer electrolyte membrane, change in a morphology of each of the first ion conductive polymer layer and the second ion conductive polymer layer occurs. Therefore, in order to secure the reaction gas barrier ability as well as the mechanical properties of the polymer electrolyte membrane, it is necessary to maintain a packing density of the polymer electrolyte membrane when preparing the polymer electrolyte membrane. In this regard, according to the polymer electrolyte membrane preparation method of the present disclosure, the packing density of the polymer electrolyte membrane may be maintained by controlling the thickness of the second ion conductive polymer layer as determined via controlling of the reaction condition in the step (S20), and controlling the heat treatment temperature in the step (S50) when preparing the polymer electrolyte membrane.

According to the present invention, the chlorination reaction of step (S20) is carried out for 5 minutes to 30 minutes, and may be carried out for 10 minutes to 30 minutes or 20 minutes to 30 minutes. When this defined range is met, the thickness of the second ion conductive polymer layer formed in at least one surface of the first ion conductive polymer layer may be controlled.

According to one embodiment of the present disclosure, the chlorination reaction of the step (S20) may be carried out by immersing the first ion conductive polymer membrane in a chlorination reaction solution containing hydrochloric acid and ammonium chloride. In this connection, the chlorination reaction solution may be a solution in which ammonium chloride is dissolved in a concentrated aqueous hydrochloric acid solution. In a specific example, the chlorination reaction solution may contain the concentrated hydrochloric acid aqueous solution at 60 wt% to 90 wt%, 70 wt% to 90 wt%, or 75 wt% to 85 wt% and the ammonium chloride at 10 wt% to 40 wt%, 10 wt% to 30 wt%, or 15 wt% to 25 wt%. When this defined range is met, the thickness of the second ion conductive polymer layer formed in at least one surface of the first ion conductive polymer layer may be controlled.

According to one embodiment of the present disclosure, the aqueous hydrochloric acid solution may have a concentration of hydrochloric acid of 35 wt% or more, 35 wt% to 50 wt%, 35 wt% to 40 wt%, or 35 wt% to 38 wt%, and may contain solid ammonium chloride having a purity of 99.0 wt% or more, or 99.5 wt% or more. The chlorination reaction solution may be a solution in which the solid ammonium chloride is completely dissolved in the aqueous hydrochloric acid solution.

According to one embodiment of the present disclosure, the chlorination reaction of the step (S20) may be carried out at a temperature of 60 °C to 100 °C, 70 °C to 90 °C, or 75 °C to 85 °C. When this defined range is met, the thickness of the second ion conductive polymer layer formed in at least one surface of the first ion conductive polymer layer may be controlled.

According to one embodiment of the present disclosure, the chlorination reaction of the step (S20) may be carried out under an inert gas atmosphere.

According to the present invention, the step (S30) includes forming the third ion conductive polymer membrane including the nitrilated ion conductive polymer layer in at least one surface of the first ion conductive polymer layer, wherein the nitrilated ion conductive polymer layer is formed by replacing chlorine in the chlorinated ion conductive polymer layer with a nitrile group. The step (S30) is carried out via a nitrilation reaction in the second ion conductive polymer membrane.

According to one embodiment of the present disclosure, the nitrilation reaction in the step (S30) is carried out to replace an entirety of chlorine in the chlorinated ion conductive polymer layer of the second ion conductive polymer membrane prepared in the step (S20) with the nitrile group.

According to one embodiment of the present disclosure, the nitrilation reaction of the step (S30) may be carried out by immersing the second ion conductive polymer membrane in a nitrilation reaction solution containing a nitrile salt. In this connection, the nitrilation reaction solution may be a reaction solution itself in which a nitrile salt is dissolved. In a specific example, the nitrilation reaction solution may be a potassium cyanide aqueous solution. In a more specific example, the potassium cyanide aqueous solution may contain 0.01 M to 0.10 M, 0.03 M to 0.08 M, or 0.04 M to 0.06 M of potassium cyanide having a purity of 95.0 wt% or more, or 97.0 wt% or more.

According to one embodiment of the present disclosure, the nitrilation reaction of the step (S30) may be carried out for 1 hour to 10 hours, 2 hours to 6 hours, or 3 hours to 5 hours.

According to one embodiment of the present disclosure, the nitrilation reaction of the step (S30) may be carried out at a temperature of 70°C to 110°C, 80°C to 100°C, or 85°C to 95°C.

According to one embodiment of the present disclosure, the nitrilation reaction of the step (S30) may be carried out under an inert gas atmosphere.

According to the present invention, the step (S40) includes forming the fourth ion conductive polymer membrane including the second ion conductive polymer layer in at least one surface of the first ion conductive polymer layer, wherein the second ion conductive polymer layer is formed by replacing the nitrile group of the nitrilated ion conductive polymer layer with a carboxylic acid group. The step (S40) is carried out via the hydrolysis reaction in the third ion conductive polymer membrane.

According to one embodiment of the present disclosure, the hydrolysis reaction of the step (S40) may be carried out to replace all of the nitrile groups of the nitrilated ion conductive polymer layer of the third ion conductive polymer membrane as prepared in the step (S30) with the carboxylic acid groups.

According to one embodiment of the present disclosure, the hydrolysis reaction of the step (S40) may be carried out by immersing the third ion conductive polymer membrane in boiling water. In this connection, the boiling water may mean a state in which water used for carrying out the hydrolysis reaction is continuously heated at a temperature above the boiling point. In this case, the water may be ion-exchanged water or distilled water.

According to one embodiment of the present disclosure, the hydrolysis reaction of the step (S40) may be carried out for 1 hour to 10 hours, 1 hour to 5 hours, or 1 hour to 3 hours.

According to one embodiment of the present disclosure, the hydrolysis reaction of the step (S40) may be carried out under an atmospheric atmosphere.

According to the present invention, the step (S50) include s preparing the polymer electrolyte membrane. In the step (S50), the fourth ion conductive polymer membrane may be heat-treated at ±10°C around a glass transition temperature of the ion conductive polymer containing a carboxylic acid group.

According to one embodiment of the present disclosure, in order to maintain the packing density of the polymer electrolyte membrane, as described above, it is necessary to control the heat treatment temperature of the step (S50). Accordingly, the heat treatment of the step (S50) is performed at ±10°C around the glass transition temperature of the ion conductive polymer containing a carboxylic acid group. In another example, the heat treatment of the step (S50) may be carried out at 90°C to 105°C, 95°C to 105°C, or 98°C to 102°C. In carrying out the heat treatment of the step (S50), when the heat treatment is performed at an excessively high temperature without considering the glass transition temperature of the ion conductive polymer containing the carboxylic acid group as well as the glass transition temperature of the ion conductive polymer containing the sulfonic acid group, the heat treatment step may affect physical properties of the ion conductive polymer containing the sulfonic acid group such that the packing density of the polymer electrolyte membrane is not maintained. When the heat treatment is performed at a temperature too lower than the glass transition temperature of the ion conductive polymer containing the carboxylic acid group, the heat treatment step may not cause change in the physical properties of the ion conductive polymer containing the carboxylic acid group such that the packing density of the polymer electrolyte membrane is not maintained.

According to one embodiment of the present disclosure, the polymer electrolyte membrane preparation method may further include drying the fourth ion conductive polymer membrane prepared in the step (S40), prior to performing the heat treatment of the step (S50). In this connection, the drying may be carried out for 12 hours to 36 hours, 18 hours to 30 hours, or 21 hours to 27 hours.

According to one embodiment of the present disclosure, in the polymer electrolyte membrane preparation method, the step (S20) may allow the thickness of the second ion conductive polymer layer to be adjusted to be in a range of 1% to 80% of the thickness of the polymer electrolyte membrane and at the same time, the step (S50) may allow the packing density of the polymer electrolyte membrane to be maintained.

Further, the present invention provides a membrane-electrode assembly including the polymer electrolyte membrane. The membrane-electrode assembly includes a negative-electrode; a positive-electrode; and a polymer electrolyte membrane interposed between the negative-electrode and the positive-electrode, wherein the polymer electrolyte membrane includes the polymer electrolyte membrane according to the present invention.

According to one embodiment of the present disclosure, the membrane-electrode assembly may be an assembly of an electrode in which an electrochemical catalytic reaction between fuel such as hydrogen gas and air containing oxygen occurs and a polymer electrolyte membrane in which transfer of hydrogen ions occurs. Alternatively, the membrane-electrode assembly may include the negative-electrode, the positive-electrode and the polymer electrolyte membrane interposed between the negative-electrode and the positive-electrode which are adhered to each other.

According to one embodiment of the present disclosure, the membrane-electrode assembly may further include a gas diffusion layer disposed on one surface of each of the negative-electrode (fuel electrode or hydrogen electrode) and the positive-electrode (oxygen electrode or air electrode) for supplying the reaction gas. In a specific example, the membrane-electrode assembly may be interposed between the gas diffusion layer disposed on one surface of the negative-electrode and the gas diffusion layer disposed on one surface of the positive-electrode.

According to one embodiment of the present disclosure, the membrane-electrode assembly may further include a catalyst layer disposed on the other surface of each of the negative-electrode (fuel electrode or hydrogen electrode) and the positive-electrode (oxygen electrode or air electrode) for supplying the reaction gas. In a specific example, the polymer electrolyte membrane may be interposed between the catalyst layer disposed on the other surface of the negative-electrode and the catalyst layer disposed on the other surface of the positive-electrode.

According to one embodiment of the present disclosure, the membrane-electrode assembly may have at least one stack structure selected from a group consisting of negative-electrode/polymer electrolyte membrane/positive-electrode, gas diffusion layer/negative-electrode/polymer electrolyte membrane/positive-electrode, negative-electrode/polymer electrolyte membrane/positive-electrode/gas diffusion layer, gas diffusion layer/negative-electrode/polymer electrolyte membrane/positive-electrode/gas diffusion layer, negative-electrode/catalyst layer/polymer electrolyte membrane/positive-electrode, negative-electrode/polymer electrolyte membrane/catalyst layer/positive-electrode, negative-electrode/catalyst layer/polymer electrolyte membrane/catalyst layer/positive-electrode, gas diffusion layer/catalyst layer/negative-electrode/polymer electrolyte membrane/positive-electrode, gas diffusion layer/negative-electrode/polymer electrolyte membrane/catalyst layer/positive-electrode, gas diffusion layer/catalyst layer/negative-electrode/polymer electrolyte membrane/catalyst layer/positive-electrode, negative-electrode/polymer electrolyte membrane/catalyst layer/positive-electrode/gas diffusion layer, negative-electrode/catalyst layer/polymer electrolyte membrane/positive-electrode/gas diffusion layer, negative-electrode/catalyst layer/polymer electrolyte membrane/catalyst layer/positive-electrode/gas diffusion layer, and gas diffusion layer/catalyst layer/negative-electrode/polymer electrolyte membrane/catalyst layer/positive-electrode/gas diffusion layer.

According to one embodiment of the present disclosure, the catalyst layer of each of the negative-electrode and the positive-electrode may include a catalytic metal and a conductive material on which the catalytic metal is supported. The catalyst may include a metal that promotes an oxidation reaction of hydrogen and a reduction reaction of oxygen. Specific examples thereof may include platinum, gold, silver, palladium, iridium, rhodium, ruthenium, iron, cobalt, nickel, chromium, tungsten, manganese, vanadium, and alloys thereof. Further, the conductive material may be activated carbon. Further, the catalyst layer of each of the negative-electrode and the positive-electrode may include an ion conductive polymer identical with the ion conductive polymer as an electrode binder.

According to one embodiment of the present disclosure, the membrane-electrode assembly may be prepared via compression such as thermocompression bonding of the negative-electrode; the positive-electrode; and the polymer electrolyte membrane interposed between the negative-electrode and the positive-electrode which are in close contact with each other. Further, the membrane-electrode assembly may be prepared by directly applying and drying a catalyst layer slurry for forming the catalyst layer of each of the negative-electrode and the positive-electrode on one surface or both opposing surfaces of the polymer electrolyte membrane.

According to one embodiment of the present disclosure, the gas diffusion layer may have a double-layer structure composed of a micro-porous layer (MPL) and a macro-porous substrate. The microporous layer may be prepared by mixing carbon powders such as acetylene black carbon, or black pearls carbon with a polytetrafluoroethylene (PTFE)-based hydrophobic agent. Then, the MPL may be applied on one surface or both opposing surfaces of the macro-porous substrate depending on applications. The macro-porous substrate may be composed of carbon fibers and polytetrafluoroethylene-based hydrophobic material. In a specific example, the carbon fibers may employ carbon fiber clothes, carbon fiber felts, and carbon fiber papers.

Further, the present invention provides a fuel cell including the membrane-electrode assembly. The fuel cell may include a stack, a fuel supply, and an oxidizing agent supply.

According to one embodiment of the present disclosure, the stack may include at least one membrane-electrode assembly. When the stack has two or more membrane-electrode assemblies, the stack may further include a bipolar plate interposed therebetween. The bipolar plate serves as a conductor connecting the negative-electrode and the positive-electrode in series with each other while delivering the fuel and the oxidizing agent supplied from an outside to the membrane-electrode assembly.

According to one embodiment of the present disclosure, the fuel supply may be intended to supply the fuel to the stack. The fuel supply may include a fuel tank for storing the fuel and a pump for supplying the fuel stored in the fuel tank to the stack. The fuel may be gas or liquid state hydrogen or hydrocarbon fuel. Examples of the hydrocarbon fuel may be alcohols such as methanol, ethanol, propanol and butanol, or natural gas.

According to one embodiment of the present disclosure, the oxidizing agent supply may supply the oxidizing agent to the stack. The oxidizing agent may be typically the air. The oxygen or air may be injected using a pump.

According to one embodiment of the present disclosure, the fuel cell may include a polymer electrolyte membrane fuel cell, a direct liquid fuel cell, a direct methanol fuel cell, a direct formic acid fuel cell, a direct ethanol fuel cell, or a direct dimethyl ether fuel cell.

Hereinafter, Examples of the present disclosure will be described in detail so that a person having ordinary knowledge in the technical field to which the present disclosure belongs may easily implement the disclosure. However, the present disclosure may be implemented in several different forms and is not limited to Examples described herein.

## Examples

### Example 1

<Preparation of first ion conductive polymer membrane>

Nafion 212 as a poly(perfluorosulfonic acid)polymer membrane having a thickness of 50.8μm was prepared as the first ion conductive polymer membrane.

<Chlorination Reaction>

20 parts by weight of ammonium chloride having a purity of 99.5wt% (Sigma Aldrich) was added to 80 parts by weight of aqueous hydrochloric acid solution (Sigma Aldrich) having a concentration of 37wt%. We completely dissolved the ammonium chloride at 80°C to prepare a chlorination reaction solution.
The first ion conductive polymer membrane was immersed in the chlorination reaction solution. The chlorination reaction was performed while refluxing at 80°C for 5 minutes under nitrogen atmosphere, thereby preparing the second ion conductive polymer membrane.

<Nitrilation Reaction>

Potassium cyanide (Sigma Aldrich) having a purity of 97.0 wt% was used to prepare 0.05 M potassium cyanide aqueous solution at 90°C. Thus, a nitrilation reaction solution was prepared.
The second ion conductive polymer membrane was immersed in the nitrilation reaction solution, and the nitrilation reaction was performed while refluxing at 90°C for 4 hours under nitrogen atmosphere. Thus, the third ion conductive polymer membrane was prepared.

<Hydrolysis reaction>

Ion-exchanged water was boiled at a temperature of 100°C to prepare a hydrolysis reaction solution.
The third ion conductive polymer membrane was immersed in the hydrolysis reaction solution, and a hydrolysis reaction was performed in the boiling water for 2 hours under an atmospheric atmosphere. Thus, the fourth ion conductive polymer membrane was prepared.

<Drying and heat treatment>

After drying the fourth ion conductive polymer membrane at room temperature for 24 hours, heat treatment was performed at atmospheric pressure and 100°C for 1 hour, thereby preparing a polymer electrolyte membrane.

### Example 2

A polymer electrolyte membrane was prepared in the same manner as in Example 1, except that during the chlorination reaction, the first ion conductive polymer membrane was immersed in the chlorination reaction solution, and the chlorination reaction was performed while refluxing at 80°C and for 30 minutes under a nitrogen atmosphere, thereby preparing the second ion conductive polymer membrane.

### Comparative Example 1

Nafion 212 as a polymer membrane made of poly(perfluorosulfonic acid) and having a thickness of 50.8μm was used as the polymer electrolyte membrane.

### Comparative Example 2

<Preparation of ion conductive polymer membrane>

Nafion 212 as a poly(perfluorosulfonic acid) polymer membrane having a thickness of 50.8μm was prepared

as an ion conductive polymer membrane.

<Drying and heat treatment>

The ion conductive polymer membrane was heat-treated under atmospheric pressure and 100°C and for 1 hour, thereby preparing a polymer electrolyte membrane.

**Comparative Example 3**

A polymer electrolyte membrane was prepared in the same manner as in Example 1, except that during the chlorination reaction, the first ion conductive polymer membrane was immersed in the chlorination reaction solution, and the chlorination reaction was performed while refluxing at 80°C and for 30 secs under a nitrogen atmosphere, thereby preparing the second ion conductive polymer membrane.

**Comparative Example 4**

A polymer electrolyte membrane was prepared in the same manner as in Example 1, except that during the chlorination reaction, the first ion conductive polymer membrane was immersed in the chlorination reaction solution, and the chlorination reaction was performed while refluxing at 80°C and for 40 minutes under a nitrogen atmosphere, thereby preparing the second ion conductive polymer membrane.

**Experimental Examples**

**Experimental Example 1**

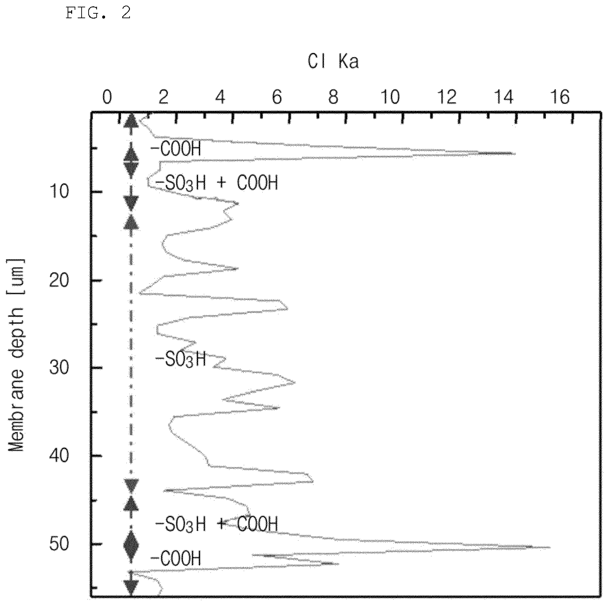

In the polymer electrolyte membrane prepared in Example 2, hydrogen ions were replaced with sodium ions. Thus, a cross section of the polymer electrolyte membrane was imaged and analyzed via a line scan method using SEM-EDX (Scanning Electron Microscope-Energy Dispersive X-ray Spectrometer). Results are shown in FIG. 2.

As shown in FIG. 2, it was identified that the polymer electrolyte membrane of Example 2 prepared according to the present disclosure had the first ion conductive polymer layer including the ion conductive polymer containing a sulfonic acid group, and the second ion conductive polymer layer including the ion conductive polymer containing a carboxylic acid group and formed in each of both opposing surfaces of the first ion conductive polymer layer. It was identified that a total thickness of the second ion conductive polymer layer was about 40% of a thickness of the polymer electrolyte membrane.

**Experimental Example 2**

A total thickness of the second ion conductive polymer layer of each of the polymer electrolyte membranes prepared in Example 1 and Comparative Examples 1 to 4 was identified in the same manner as in Experimental Example 1, and is shown in Table 1 below.

Further, a thickness of the second ion conductive polymer layer, hydrogen permeability, oxygen permeability, and ionic conductivity, of each of the polymer electrolyte membranes prepared in Examples 1 and 2 and Comparative Examples 1 to 4 were measured using a following method and are described together in Table 1 below. A ratio of the thickness of the second ion conductive polymer layer to the thickness of the polymer electrolyte membrane is converted into a percentage and is described in Table 1 below.

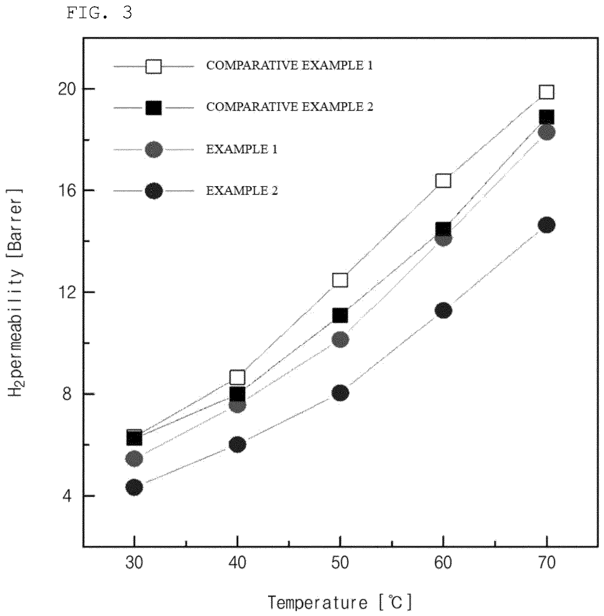

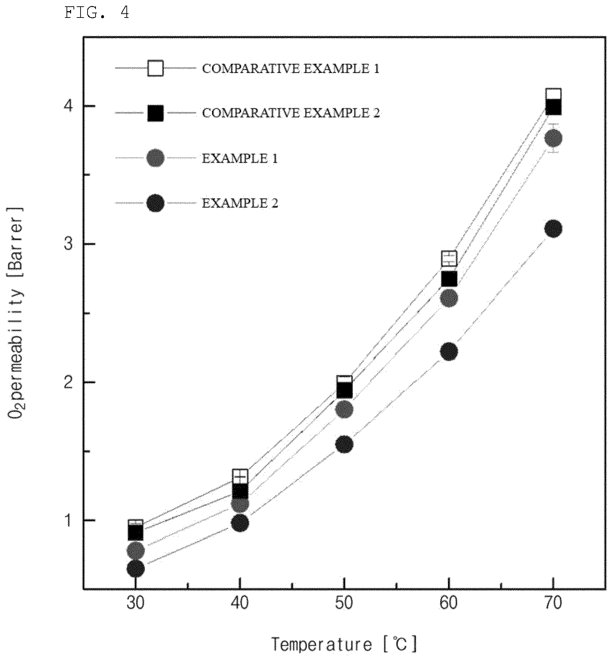

Further, the measurement results of the hydrogen permeability and the oxygen permeability based on a temperature of each of the polymer electrolyte membranes as prepared in Examples 1 and 2 and Comparative Examples 1 and 2 are shown in graphs of FIG. 3 and FIG. 4, respectively.

- the thickness ($\mu$m) was measured using VL-50 from MITUTOYO (Japan).
- Hydrogen permeability (Barrer): The hydrogen permeability of each of the polymer electrolyte membranes as prepared in Examples 1 and 2 and Comparative Examples 1 to 4 was measured using the time-lag method. The hydrogen permeability at 70°C is shown. Specifically, a time-lag hydrogen permeability measurement apparatus had two chambers separated from each other via the polymer electrolyte membrane prepared in each of Examples 1 and 2 and Comparative Examples 1 to 4 and having different pressures. While one chamber was maintained at a pressure of 0 atm, hydrogen gas was introduced into the other chamber so that a pressure therein was changed to 1 atm. Then the hydrogen gas permeated into the polymer electrolyte membrane at a temperature of 30 to 70°C and for 2 hours or less. Then, a value obtained by multiplying a permeation flow rate into the polymer electrolyte membrane per an unit area, a unit time and a pressure by the membrane thickness was converted into a Barrer unit (1 Barrer = $10^{-10}$ (cm*cm$^3$)/(cm$^2$*s*cmHg) = $3.348 \times 10^{-16}$ mol·m/m$^2$·s·Pa).

- Oxygen permeability (Barrer): The oxygen permeability of each of the polymer electrolyte membranes as prepared in Examples 1 and 2 and Comparative Examples 1 to 4 was measured using the time-lag method. The oxygen permeability at 70°C is shown. Specifically, a time-lag oxygen permeability measurement apparatus had two chambers separated from each other via the polymer electrolyte membrane prepared in each of Examples 1 and 2 and Comparative Examples 1 to 4 and having different pressures. While one chamber was maintained at a pressure of 0 atm, oxygen gas was introduced into the other chamber so that a pressure therein was changed to 1 atm. Then the oxygen gas permeated into the polymer electrolyte membrane at a temperature of 30 to 70°C and for 2 hours or less. Then, a value obtained by multiplying a permeation flow rate into the polymer electrolyte membrane per an unit area, a unit time and a pressure by the membrane thickness was converted into a Barrer unit (1 Barrer = $10^{-10}$ (cm*cm$^3$)/(cm$^2$*s*cmHg) = $3.348 \times 10^{-16}$ mol·m/m$^2$·s·Pa).

- Ionic conductivity (S/cm): Na$^+$ ion conductivity in each of the polymer electrolyte membranes prepared in Examples 1 and 2 and Comparative Examples 1 to 4 was measured at a temperature of 80°C and a relative humidity of 50%. Specifically, ohmic resistance or bulk resistance was measured using a four point probe AC impedance spectroscopic method. Then, the Na$^+$ ion conductivity was calculated using Equation 1 below.

[Equation 1]

$$\sigma = L/RS$$

$\sigma$ denotes the Na+ ion conductivity (S/cm), R denotes the ohmic resistance ($\Omega$) of the polymer electrolyte membrane, L denotes a distance (cm) between electrodes, and S denotes an area (cm$^2$) of the electrolyte in which a constant current flows.

[Table 1]

| Examples | | Example | | Comparative Example | | | |
|---|---|---|---|---|---|---|---|
| | | 1 | 2 | 1 | 2 | 3 | 4 |
| Total thickness of second ion conductive polymer layer | ($\mu$m) | 10.0 | 20.0 | - | - | - | 50.0 |
| Thickness of polymer electrolyte membrane | ($\mu$m) | 50.0 | 50.0 | 50.8 | 50.0 | 50.3 | 50.2 |
| Ratio of thickness of second ion conductive polymer layer | (%) | 20.0 | 40.0 | 0 | 0 | 0 | 99.6 |
| Hydrogen permeability | (Barrer)* | 18.30 | 14.64 | 19.90 | 18.90 | 19.50 | 12.90 |
| Oxygen permeability | (Barrer)* | 3.77 | 3.11 | 4.07 | 4.00 | 4.02 | 2.10 |
| Ionic conductivity | (S/cm) | 0.029 | 0.024 | 0.028 | 0.031 | 0.025 | 0.011 |
| * 1 Barrer = $3.348 \times 10^{-16}$ mol·m/m$^2$·s·Pa | | | | | | | |

As shown in Table 1, FIG. 3 and FIG. 4, it could be identified that the polymer electrolyte membrane prepared according to the present disclosure had the same thickness and exhibited the same ionic conductivity, and lowered hydrogen permeability and oxygen permeability because the second ion conductive polymer layer was formed at an appropriate thickness ratio, compared to Comparative Example 1 free of any treatment on the ion conductive polymer membrane and Comparative Example 2 where only the heat treatment step was performed. In particular, it was identified that in Example 2, hydrogen permeability and oxygen permeability were significantly reduced, and thus the reaction gas barrier ability was very excellent.

On the contrary, in Comparative Example 3 in which a series of steps including the chlorination reaction were performed on the polymer electrolyte membrane, and the chlorination reaction duration was very short, the second ion conductive polymer layer to be formed in accordance with the present disclosure was not formed at all. Accordingly, each of hydrogen permeability and oxygen permeability as well as ionic conductivity thereof was maintained at a level similar to that of each of Comparative Examples 1 and 2 and thus was not improved.

Further, in Comparative Example 4 in which a series of steps including the chlorination reaction were performed on the polymer electrolyte membrane, and the chlorination reaction duration was larger than that in Example 2, the second ion conductive polymer layer constituted a substantial amount of the polymer electrolyte membrane. Thus, sharp decrease in a proportion of the first ion conductive polymer layer occurred. Thus, the ionic conductivity was very poor.

It could be identified from these results that the polymer electrolyte membrane according to the present disclosure has high hydrogen ion conductivity and excellent reaction gas barrier ability.

The polymer electrolyte membrane according to the present disclosure has a high hydrogen ion conductivity and an excellent reaction gas barrier ability.

Further, the membrane-electrode assembly including the polymer electrolyte membrane according to the present disclosure has an excellent reaction gas barrier ability.

Further, in the fuel cell including the membrane-electrode assembly according to the present disclosure, the thinning and the pinhole resulting from structural decomposition of the polymer electrolyte membrane due to the reaction gas permeation may be prevented. Thus, the fuel cell has a long lifespan.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

**Claims**

1. A polymer electrolyte membrane comprising:

   a first ion conductive polymer layer; and
   a second ion conductive polymer layer disposed on at least one surface of the first ion conductive polymer layer,
   wherein the first ion conductive polymer layer comprises a first ion conductive polymer comprising a sulfonic acid group,
   wherein the second ion conductive polymer layer comprises a second ion conductive polymer comprising a carboxylic acid group,
   wherein a thickness of the second ion conductive polymer layer is in a range of 1% to 80% of a thickness of the polymer electrolyte membrane,
   wherein the second ion conductive polymer layer comprises:

   a third ion conductive polymer layer disposed on at least one surface of the first ion conductive polymer layer; and
   a fourth ion conductive polymer layer disposed on one surface of the third ion conductive polymer layer,
   wherein the third ion conductive polymer layer comprises a third ion conductive polymer comprising the carboxylic acid group and the sulfonic acid group, and
   wherein the fourth ion conductive polymer layer comprises a fourth ion conductive polymer comprising the carboxylic acid group, and
   wherein the third ion conductive polymer layer has a first concentration gradient of the carboxylic acid group and a second concentration gradient of the sulfonic acid group.

2. The polymer electrolyte membrane of claim 1, wherein a thickness of the third ion conductive polymer layer is in a range of 1 to 40% of the thickness of the polymer electrolyte membrane, and
   wherein a thickness of the fourth ion conductive polymer layer is in a range of 1 to 40% of the thickness of the polymer electrolyte membrane.

3. The polymer electrolyte membrane of claim 1, wherein

   the first concentration gradient of the carboxylic acid group increases in a thickness direction from the first ion conductive polymer layer to the fourth ion conductive polymer layer, and
   the second concentration gradient of the sulfonic acid group decreases in the thickness direction from the first ion conductive polymer layer to the fourth ion conductive polymer layer.

4. The polymer electrolyte membrane of claim 1, wherein the polymer electrolyte membrane comprises:

   the first ion conductive polymer layer; and
   the second ion conductive polymer layer disposed one surface of the first ion conductive polymer layer,
   wherein the thickness of the second ion conductive polymer layer is in a range of 1 to 40% of the thickness of the polymer electrolyte membrane.

5. The polymer electrolyte membrane of claim 1, wherein the polymer electrolyte membrane comprises:

   the first ion conductive polymer layer; and
   a plurality of the second ion conductive polymer layers respectively disposed on both opposing surfaces of the first ion conductive polymer layer,
   wherein a thickness of each of the plurality of the second ion conductive polymer layers is in a range of 1 to 40% of the thickness of the polymer electrolyte membrane.

6. The polymer electrolyte membrane of claim 1, wherein the thickness of the polymer electrolyte membrane is in a range of 10$\mu$m to 100$\mu$m.

7. The polymer electrolyte membrane of claim 1, wherein the first ion conductive polymer comprises a sulfonated product of at least one polymer selected from the group consisting of a fluoropolymer, a hydrocarbon-based polymer, and a partially fluorinated polymer.

8. The polymer electrolyte membrane of claim 1, wherein the first ion conductive polymer layer comprises a porous substrate.

9. The polymer electrolyte membrane of claim 1, wherein the polymer electrolyte membrane has a hydrogen permeability, determined as described in the description, of 61.975 $\times$ 10$^{-16}$ mol·m/m$^2$·s·Pa (18.5 Barrer) or less at 70°C.

10. The polymer electrolyte membrane of claim 1, wherein the polymer electrolyte membrane has an oxygen permeability, determined as described in the description, of less than 13.4 $\times$ 10$^{-16}$ mol·m/m$^2$·s·Pa (4.0 Barrer) at 70°C.

11. A method for preparing a polymer electrolyte membrane comprising:

    preparing a first ion conductive polymer membrane comprising a first ion conductive polymer layer comprising a sulfonic acid group;
    performing a chlorination reaction on at least one surface of the first ion conductive polymer membrane for 5 to 30 minutes such that a second ion conductive polymer membrane comprising a chlorinated ion conductive polymer layer is formed on at least one surface of the first ion conductive polymer layer, wherein the chlorinated ion conductive polymer layer is formed by partially chlorinating the sulfonic acid group;
    performing a nitrilation reaction on the second ion conductive polymer membrane such that a third ion conductive polymer membrane comprising a nitrilated ion conductive polymer layer is formed on at least one surface of the first ion conductive polymer layer, wherein the nitrilated ion conductive polymer layer is formed by replacing a chlorine in the chlorinated ion conductive polymer layer with a nitrile group;
    performing a hydrolysis reaction on the third ion conductive polymer membrane such that a fourth ion conductive polymer membrane comprising a second ion conductive polymer layer is formed on at least one surface of the first ion conductive polymer layer, wherein the second ion conductive polymer layer is formed by replacing the nitrile group of the nitrilated ion conductive polymer layer with a carboxylic acid group; and
    performing heat treatment on the fourth ion conductive polymer membrane at ±10°C around a glass transition temperature of an ion conductive polymer comprising a carboxylic acid group, thereby preparing the polymer electrolyte membrane,
    wherein a thickness of the second ion conductive polymer layer is in a range of 1 to 80% of a thickness of the polymer electrolyte membrane.

12. A membrane-electrode assembly comprising a negative-electrode; a positive-electrode; and a polymer electrolyte membrane comprising the polymer electrolyte membrane of claim 1, interposed between the negative-electrode and the positive-electrode.

13. A fuel cell comprising the membrane-electrode assembly of claim 12.

**Patentansprüche**

1. Polymerelektrolytmembran, umfassend:

   eine erste ionenleitende Polymerschicht; und

eine zweite ionenleitende Polymerschicht, die sich auf wenigstens einer Fläche der ersten ionenleitenden Polymerschicht befindet,

wobei die erste ionenleitende Polymerschicht ein erstes ionenleitendes Polymer umfasst, das eine Sulfonsäuregruppe umfasst,

wobei die zweite ionenleitende Polymerschicht ein zweites ionenleitendes Polymer umfasst, das eine Carbonsäuregruppe umfasst,

wobei die Dicke der zweiten ionenleitenden Polymerschicht im Bereich von 1% bis 80% der Dicke der Polymerelektrolytmembran liegt,

wobei die zweite ionenleitende Polymerschicht Folgendes umfasst:

eine dritte ionenleitende Polymerschicht, die sich auf wenigstens einer Fläche der ersten ionenleitenden Polymerschicht befindet; und

eine vierte ionenleitende Polymerschicht, die sich auf einer Fläche der dritten ionenleitenden Polymerschicht befindet,

wobei die dritte ionenleitende Polymerschicht ein drittes ionenleitendes Polymer umfasst, das die Carbonsäuregruppe und die Sulfonsäuregruppe umfasst, und

wobei die vierte ionenleitende Polymerschicht ein viertes ionenleitendes Polymer umfasst, das die Carbonsäuregruppe umfasst, und

wobei die dritte ionenleitende Polymerschicht einen ersten Konzentrationsgradienten der Carbonsäuregruppe und einen zweiten Konzentrationsgradienten der Sulfonsäuregruppe aufweist.

2. Polymerelektrolytmembran gemäß Anspruch 1, wobei die Dicke der dritten ionenleitenden Polymerschicht im Bereich von 1% bis 40% der Dicke der Polymerelektrolytmembran liegt und

wobei die Dicke der vierten ionenleitenden Polymerschicht im Bereich von 1% bis 40% der Dicke der Polymerelektrolytmembran liegt.

3. Polymerelektrolytmembran gemäß Anspruch 1, wobei

der erste Konzentrationsgradient der Carbonsäuregruppe in Richtung der Dicke von der ersten ionenleitenden Polymerschicht bis zur vierten ionenleitenden Polymerschicht zunimmt und

der zweite Konzentrationsgradient der Sulfonsäuregruppe in Richtung der Dicke von der ersten ionenleitenden Polymerschicht bis zur vierten ionenleitenden Polymerschicht abnimmt.

4. Polymerelektrolytmembran gemäß Anspruch 1, wobei die Polymerelektrolytmembran Folgendes umfasst:

die erste ionenleitende Polymerschicht; und

die zweite ionenleitende Polymerschicht, die sich auf einer Fläche der ersten ionenleitenden Polymerschicht befindet,

wobei die Dicke der zweiten ionenleitenden Polymerschicht im Bereich von 1% bis 40% der Dicke der Polymerelektrolytmembran liegt.

5. Polymerelektrolytmembran gemäß Anspruch 1, wobei die Polymerelektrolytmembran Folgendes umfasst:

die erste ionenleitende Polymerschicht; und

eine Vielzahl der zweiten ionenleitenden Polymerschichten, die sich jeweils auf beiden entgegengesetzten Flächen der ersten ionenleitenden Polymerschicht befinden,

wobei die Dicke von jeder der Vielzahl der zweiten ionenleitenden Polymerschichten im Bereich von 1% bis 40% der Dicke der Polymerelektrolytmembran liegt.

6. Polymerelektrolytmembran gemäß Anspruch 1, wobei die Dicke der Polymerelektrolytmembran im Bereich von 10 $\mu$m bis 100 $\mu$m liegt.

7. Polymerelektrolytmembran gemäß Anspruch 1, wobei das erste ionenleitende Polymer ein sulfoniertes Produkt wenigstens eines Polymers umfasst, das aus der Gruppe ausgewählt ist, die aus einem Fluorpolymer, einem Polymer auf Kohlenwasserstoffbasis und einem partiell fluorierten Polymer besteht.

8. Polymerelektrolytmembran gemäß Anspruch 1, wobei die erste ionenleitende Polymerschicht ein poröses Substrat umfasst.

9. Polymerelektrolytmembran gemäß Anspruch 1, wobei die Polymerelektrolytmembran eine Wasserstoffdurchlässigkeit, die so bestimmt wird, wie es in der Beschreibung beschrieben ist, von 61,975 $\times$ 10$^{-16}$ mol·m/m$^2$·s·Pa (18,5 Barrer) oder weniger bei 70°C aufweist.

10. Polymerelektrolytmembran gemäß Anspruch 1, wobei die Polymerelektrolytmembran eine Sauerstoffdurchlässigkeit, die so bestimmt wird, wie es in der Beschreibung beschrieben ist, von weniger als 13,4 $\times$ 10$^{-16}$ mol·m/m$^2$·s·Pa (4,0 Barrer) bei 70°C aufweist.

11. Verfahren zur Herstellung einer Polymerelektrolytmembran, umfassend:

das Herstellen einer ersten ionenleitenden Polymermembran, die eine erste ionenleitende Polymerschicht umfasst, welche eine Sulfonsäuregruppe umfasst;

das Durchführen einer Chlorierungsreaktion auf wenigstens einer Fläche der ersten ionenleitenden Polymermembran während 5 bis 30 Minuten, so dass eine zweite ionenleitende Polymermembran, die eine chlorierte ionenleitende Polymerschicht umfasst, auf wenigstens einer Fläche der ersten ionenleitenden Polymerschicht entsteht, wobei die chlorierte ionenleitende Polymerschicht dadurch gebildet wird, dass man die Sulfonsäuregruppe partiell chloriert;

das Durchführen einer Nitrilierungsreaktion auf der zweiten ionenleitenden Polymermembran, so dass eine dritte ionenleitende Polymermembran, die eine nitrilierte ionenleitende Polymerschicht umfasst, auf wenigstens einer Fläche der ersten ionenleitenden Polymerschicht entsteht, wobei die nitrilierte ionenleitende Polymerschicht dadurch gebildet wird, dass man Chlor in der chlorierten ionenleitenden Polymerschicht durch eine Nitrilgruppe ersetzt;

das Durchführen einer Hydrolysereaktion auf der dritten ionenleitenden Polymermembran, so dass eine vierte ionenleitende Polymermembran, die eine zweite ionenleitende Polymerschicht umfasst, auf wenigstens einer Fläche der ersten ionenleitenden Polymerschicht entsteht, wobei die zweite ionenleitende Polymerschicht dadurch gebildet wird, dass man die Nitrilgruppe der nitrilierten ionenleitenden Polymerschicht durch eine Carbonsäuregruppe ersetzt; und

das Durchführen einer Wärmebehandlung mit der vierten ionenleitenden Polymermembran bei ±10°C um eine Glasübergangstemperatur eines eine Carbonsäuregruppe umfassenden ionenleitenden Polymers herum, wodurch die Polymerelektrolytmembran hergestellt wird,

wobei die Dicke der zweiten ionenleitenden Polymerschicht im Bereich von 1% bis 80% der Dicke der Polymerelektrolytmembran liegt.

12. Membran-Elektroden-Baugruppe, umfassend eine negative Elektrode; eine positive Elektrode; und eine Polymerelektrolytmembran, die die Polymerelektrolytmembran gemäß Anspruch 1 umfasst, welche zwischen der negativen Elektrode und der positiven Elektrode eingeschoben ist.

13. Brennstoffzelle, die die Membran-Elektroden-Baugruppe gemäß Anspruch 12 umfasst.

**Revendications**

1. Membrane d'électrolyte polymère comprenant :

une première couche de polymère conducteur d'ions ; et
une deuxième couche de polymère conducteur d'ions disposée sur au moins une surface de la première couche de polymère conducteur d'ions,
dans laquelle la première couche de polymère conducteur d'ions comprend un premier polymère conducteur d'ions comprenant un groupe acide sulfonique,
dans laquelle la deuxième couche de polymère conducteur d'ions comprend un deuxième polymère conducteur d'ions comprenant un groupe acide carboxylique,
dans laquelle l'épaisseur de la deuxième couche de polymère conducteur d'ions est située dans la plage allant de 1 % à 80 % de l'épaisseur de la membrane d'électrolyte polymère,
dans laquelle la deuxième couche de polymère conducteur d'ions comprend :

une troisième couche de polymère conducteur d'ions disposée sur au moins une surface de la première couche de polymère conducteur d'ions ; et
une quatrième couche de polymère conducteur d'ions disposée sur au moins une surface de la troisième couche de polymère conducteur d'ions,

dans laquelle la troisième couche de polymère conducteur d'ions comprend un troisième polymère conducteur d'ions comprenant le groupe acide carboxylique et le groupe acide sulfonique, et

dans laquelle la quatrième couche de polymère conducteur d'ions comprend un quatrième polymère conducteur d'ions comprenant le groupe acide carboxylique, et

dans laquelle la troisième couche de polymère conducteur d'ions a un premier gradient de concentration du groupe acide carboxylique et un deuxième gradient de concentration du groupe acide sulfonique.

2. Membrane d'électrolyte polymère selon la revendication 1, dans laquelle l'épaisseur de la troisième couche de polymère conducteur d'ions est située dans la plage allant de 1 à 40 % de l'épaisseur de la membrane d'électrolyte polymère, et

dans laquelle l'épaisseur de la quatrième couche de polymère conducteur d'ions est située dans la plage allant de 1 à 40 % de l'épaisseur de la membrane d'électrolyte polymère.

3. Membrane d'électrolyte polymère selon la revendication 1, dans laquelle

le premier gradient de concentration du groupe acide carboxylique augmente dans la direction de l'épaisseur en allant de la première couche de polymère conducteur d'ions à la quatrième couche de polymère conducteur d'ions, et

le deuxième gradient de concentration du groupe acide sulfonique diminue dans la direction de l'épaisseur en allant de la première couche de polymère conducteur d'ions à la quatrième couche de polymère conducteur d'ions.

4. Membrane d'électrolyte polymère selon la revendication 1, laquelle membrane d'électrolyte polymère comprend :

la première couche de polymère conducteur d'ions ; et

la deuxième couche de polymère conducteur d'ions disposée sur une surface de la première couche de polymère conducteur d'ions,

dans laquelle l'épaisseur de la deuxième couche de polymère conducteur d'ions est située dans la plage allant de 1 à 40 % de l'épaisseur de la membrane d'électrolyte polymère.

5. Membrane d'électrolyte polymère selon la revendication 1, laquelle membrane d'électrolyte polymère comprend :

la première couche de polymère conducteur d'ions ; et

une pluralité des deuxièmes couches de polymère conducteur d'ions disposées respectivement sur les deux surfaces opposées de la première couche de polymère conducteur d'ions,

dans laquelle l'épaisseur de chacune parmi la pluralité des deuxièmes couches de polymère conducteur d'ions est située dans la plage allant de 1 à 40 % de l'épaisseur de la membrane d'électrolyte polymère.

6. Membrane d'électrolyte polymère selon la revendication 1, dans laquelle l'épaisseur de la membrane d'électrolyte polymère est située dans la plage allant de 10 $\mu$m à 100 $\mu$m.

7. Membrane d'électrolyte polymère selon la revendication 1, dans laquelle le premier polymère conducteur d'ions comprend un produit sulfoné d'au moins un polymère choisi dans l'ensemble constitué par un polymère fluoré, un polymère à base d'hydrocarbure, et un polymère partiellement fluoré.

8. Membrane d'électrolyte polymère selon la revendication 1, dans laquelle la première couche de polymère conducteur d'ions comprend un substrat poreux.

9. Membrane d'électrolyte polymère selon la revendication 1, laquelle membrane d'électrolyte polymère a une perméabilité à l'hydrogène, déterminée comme décrit dans la description, de 61,975 $\times$ 10$^{-16}$ mol·m/m$^2$·s·Pa (18,5 unités Barrer) ou moins à 70°C.

10. Membrane d'électrolyte polymère selon la revendication 1, laquelle membrane d'électrolyte polymère a une perméabilité à l'oxygène, déterminée comme décrit dans la description, inférieure à 13,4 $\times$ 10$^{-16}$ mol·m/m$^2$·s·Pa (4,0 unités Barrer) à 70°C.

11. Procédé pour préparer une membrane d'électrolyte polymère, comprenant :

la préparation d'une première membrane de polymère conducteur d'ions comprenant une première couche de polymère conducteur d'ions comprenant un groupe acide sulfonique ;

la mise en oeuvre d'une réaction de chloration sur au moins une surface de la première membrane de polymère conducteur d'ions pendant 5 à 30 minutes de façon qu'une deuxième membrane de polymère conducteur d'ions comprenant une couche de polymère conducteur d'ions chlorée soit formée sur au moins une surface de la première couche de polymère conducteur d'ions, laquelle couche de polymère conducteur d'ions chlorée est formée par chloration partielle du groupe acide sulfonique ;

la mise en oeuvre d'une réaction de nitrilation sur la deuxième membrane de polymère conducteur d'ions de façon qu'une troisième membrane de polymère conducteur d'ions comprenant une couche de polymère conducteur d'ions nitrilée soit formée sur au moins une surface de la première couche de polymère conducteur d'ions, laquelle couche de polymère conducteur d'ions nitrilée est formée par remplacement d'un chlore dans la couche de polymère conducteur d'ions chlorée par un groupe nitrile ;

la mise en oeuvre d'une réaction d'hydrolyse sur la troisième membrane de polymère conducteur d'ions de façon qu'une quatrième membrane de polymère conducteur d'ions comprenant une deuxième couche de polymère conducteur d'ions soit formée sur au moins une surface de la première couche de polymère conducteur d'ions, laquelle deuxième couche de polymère conducteur d'ions est formée par remplacement du groupe nitrile de la couche de polymère conducteur d'ions nitrilée par un groupe acide carboxylique ; et

la mise en oeuvre d'un traitement à la chaleur sur la quatrième membrane de polymère conducteur d'ions à $\pm$ 10°C de la température de transition vitreuse d'un polymère conducteur d'ions comprenant un groupe acide carboxylique, ce qui prépare ainsi la membrane d'électrolyte polymère,

dans lequel l'épaisseur de la deuxième couche de polymère conducteur d'ions est située dans la plage allant de 1 à 80 % de l'épaisseur de la membrane d'électrolyte polymère.

12. Assemblage de membrane-électrodes comprenant une électrode négative ; une électrode positive ; et une membrane d'électrolyte polymère comprenant la membrane d'électrolyte polymère de la revendication 1 interposée entre l'électrode négative et l'électrode positive.

13. Pile à combustible comprenant l'assemblage de membrane-électrodes de la revendication 12.

FIG. 1

FIG. 2

FIG. 3

FIG. 4

**EP 4 060 777 B1**

**REFERENCES CITED IN THE DESCRIPTION**

**Patent documents cited in the description**

- KR 1020210034254
- EP 3613800 A1
- WO 9850457 A1
- US 2004018411 A1
- US 2012234675 A1